# EUROPEAN PATENT APPLICATION

(11) **EP 1 675 329 A1**
(43) Date of publication of application: **28.06.2006**
(21) Application number: 05257623.8
(22) Date of filing: 13.12.2005
(51) Int. Cl.: H04L 12/58

(54) **Blocking spam messages**

(30) Priority: 21.12.2004 US 18263
(71) Applicant: LUCENT TECHNOLOGIES INC., Murray Hill, New Jersey 07974-0636 (US)
(72) Inventor: Yigang, Cai, Dupage County, IL 60565 (US); Shichang, Yu, Dupage County, IL 60565 (US)
(74) Representative: Sarup, David Alexander

(57) **Abstract**

A method and apparatus for blocking unwanted and unsolicited messages (spam) in telecommunications networks. A terminating terminal (7) is assigned a security code (25). In order to access the terminating terminal (7), the caller must supply this security code (25) as well as the identification of the called terminal (23). If the correct security code (25) has not been supplied with the call, the call is blocked. Advantageously, a called party (3) can block all calls or messages except those originating from users (1) who have been supplied with this security code (25).

## Description

### Technical Field

This invention relates to methods and apparatus for blocking unsolicited, unwanted (spam) messages.

### Background of the Invention

With the advent of the Internet, it has become easy to send messages to a large number of destinations at little or no cost to the sender. These messages include unsolicited and unwanted messages (spam) which are a nuisance to the receiver of the message who has to clear the message and determine whether it is of any importance. Further, it is a nuisance to the carrier of the telecommunications network used for transmitting the message, not only because it presents a customer relations problem with respect to irate customers who are flooded with spam, but also because these messages, for which there is usually little or no revenue, use network resources. An illustration of the seriousness of this problem is given by the following two statistics. In China in 2003, two trillion short message service (SMS) messages were sent over the Chinese telecommunications network; of these messages, an estimated three quarters were spam messages. The second statistics is that in the United States an estimated 85-90% of e-mail messages are spam.

A number of arrangements have been proposed and many implemented for cutting down on the number of delivered spam messages. Various arrangements - have been proposed for analyzing messages prior to delivering them. According to one arrangement, if the calling party is not one of a pre-selected group specified by the called party, the message is blocked. Spam messages can also be intercepted by permitting a called party to specify that no messages destined for more than N destinations are to be delivered.

A called party can refuse to publicize his/her telephone number or e-mail address. In addition to the obvious disadvantages of not allowing callers to look up the telephone number or e-mail address of the called party, such arrangements are likely to be ineffective. An unlisted e-mail address could be detected by a sophisticated hacker who intercepts e-mail message headers without opening the message. An unlisted called number simply invites the caller to send messages to all 10,000 telephone numbers of an office code; as mentioned above, this is very easy with present arrangements for sending messages to a plurality of destinations.

A problem of the prior art is that the methods of intercepting spam messages are inefficient and/or use excessive amounts of network resources.

### Summary of the Invention

The above problem is substantially alleviated in accordance with the principles of Applicants' invention wherein a called party is assigned a security code; the called party notifies callers from which it is willing to receive messages of this security code, callers attempting to reach that called party supply the security code as well as the identification (e.g., e-mail address or telephone number) of the called party. Advantageously, only messages from callers whoknow the called party's security code are transmitted to that called party.

In accordance with one feature of Applicants' invention, certain parties (e.g., the government or a law enforcement agency) are allowed to transmit messages to the called party without supplying the security code. Advantageously, this arrangement allows legitimate transmitters of messages to transmit their messages to the called party without knowing the security code of that called party.

In accordance with one feature of Applicants' invention, the security code is identified by a delimiter and is transmitted either before or after the identification of the called party.

In accordance with another feature of Applicants' invention, the security code preceded by an identifiable delimiter such as a combination of an asterisk (*) and pound (#) sign can be inserted within the text of a message. This security code can then be identified in order to allow it to be checked against the security code assigned to the called party. Advantageously, this avoids placing the security code in the called address field of the message header.

In one preferred embodiment, a database is attached through a server to the telecommunications network serving the called party. In the database are stored the identification of the called parties having a class of service for blocking unwanted calls in accordance with the principles of this invention, and for each such called party, the security code for that party is stored. Advantageously, such a database can be accessed through the signaling arrangements of the network without requiring that a circuit connection to that database be established.

The preferred embodiment for this invention is for short message service (SMS); however, the same arrangement and principles can be applied to e-mail, to paging systems (the paging server acting as a network blocks transmission of the paging message if the appropriate security code is not provided), calls from and/or to landline telephones, calls from/to or between mobile stations, and calls from/to or between IP terminals.

In addition, this type of arrangement can be used as a substitute for unlisted telephone numbers by requiring that callers to such numbers, which can now be listed, must identify themselves as legitimate callers by providing the security code for the equivalent of the unlisted number. Advantageously, using this arrangement, called parties may block calls from harassing callers by requiring that all callers provide the security code. If the security code should be lost or revealed, the user of the called terminal can arrange to change the security code and notify all allowed callers without requiring the intervention of the telephone carrier to change the unlisted number.

### Brief Description of the Drawing(s)

FIG. 1 is a block diagram illustrating the operation of a preferred embodiment of Applicants' invention as applied to short message service (SMS) for mobile systems;
FIG. 2 is a flow diagram illustrating the establishment of the service for a particular mobile terminal;
FIG. 3 is a flow diagram illustrating the processing of an SMS call; and
FIG. 4 is a generalized block diagram illustrating the operation of Applicants' invention for many different types of telecommunications services.

### Detailed Description

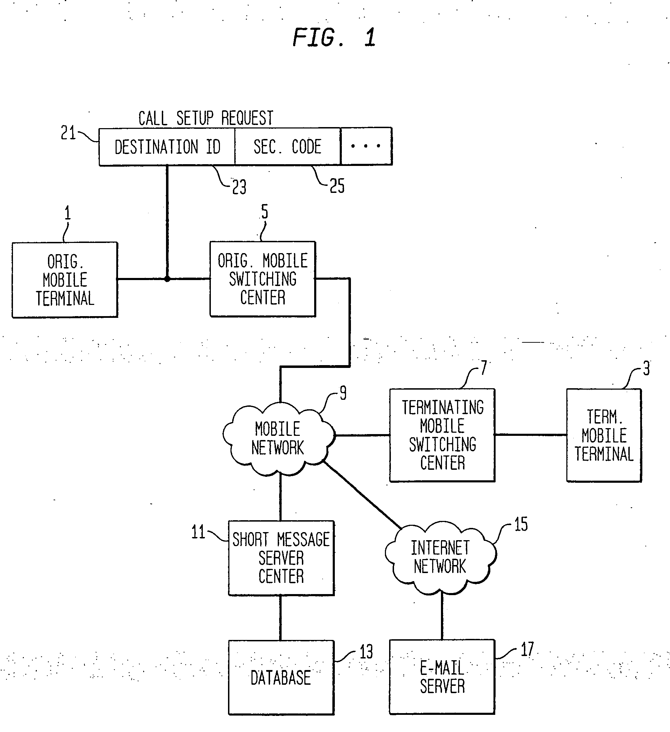

FIG. 1 is a block diagram illustrating the operation of Applicants' invention as applied to mobile short message service (SMS). An originating mobile terminal 1 wishes to send a short message to a terminating mobile terminal 3. The originating terminal sends a call setup request 21, comprising an identification 23 of the called party (terminating mobile terminal 3), and a security code 25. The message is to be sent via an originating mobile switching center 5, a mobile network 9, and a terminating mobile switching center 7. Attached to the mobile network 9 is a short message service center 11 which accesses a database 13. The database 13 stores a security code for each terminating mobile terminal subscribing to the spam blocking service described herein. Prior to establishing a connection between originating mobile terminal 1 and terminating mobile terminal 3, the database 13 is consulted and if the terminating mobile terminal 3 has an associated security code the connection request is checked to make sure that the correct security code has been supplied. If not, the message is blocked.

The SMSC can also store security codes for e-mail addresses when the SMS message has an IP (email) destination. In case the short message is also an e-mail message, the SMSC can check for the presence of the correct security code and, if that code is present, pass the message via the Internet Network 15 to an e-mail server 17, for subsequent access and delivery to an e-mail user (not shown). The access and delivery to the destination e-mail user is provided as in the prior art.

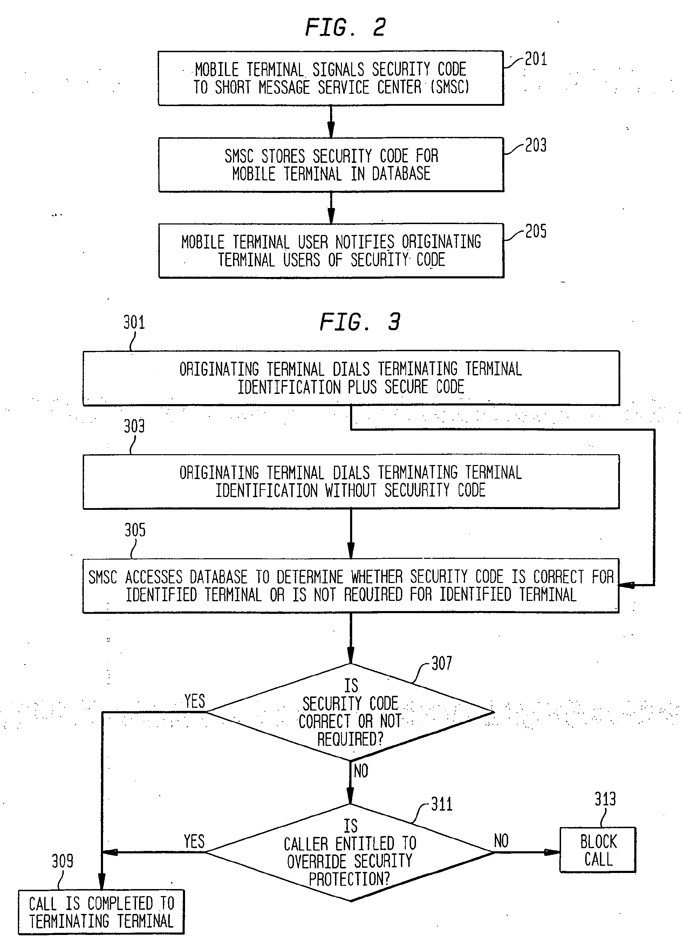

FIG. 2 is a flow diagram illustrating the setup of the service. A mobile terminal signals its security code to a short message server center (SMSC) (action block 201). The SMSC stores the security code in its associated database (action block 203). The mobile terminal user then notifies the various originating terminal users which are allowed to send messages to that mobile terminal of its security code so that these terminals can send messages to that mobile terminal (action block 205).

In this particular embodiment, the mobile terminal directly signals its security code to the SMSC and the associated database. In other embodiments, the contents of the associated database are under the control of the carrier and are accessed via a data terminal of the carrier. The advantage of this latter arrangement is that a greater degree of security can be obtained because of the controlled access to the carrier terminal. The disadvantage is the necessity for involving the carrier in order to set up or change the security code.

FIG. 3 illustrates the processing of an SMS call. The originating terminal dials the terminating terminal identification and security code (action block 301). Alternatively, an originating terminal from a caller such as a law enforcement agency entitled to override security protection dials the terminating terminal identification without supplying a security code (action block 303). The SMSC accesses the database to determine whether a security code has been assigned to the terminating terminal and if so whether the security code if any that accompanies the call is correct for the identified terminal (action block 305). Test 307 is used to determine if a security code is required and if the correct security code has been supplied. If a security code is either not required or the correct security code has been supplied, then the call is completed to the terminating terminal (action block 309). If a security code is required but no security code or an incorrect security code has been provided, then test 311 is used to determine whether the caller is entitled to override the security protection. If the caller is so entitled then the call is completed (action block 309). If the caller is not entitled to override the security protection then the call is blocked (action block 313).

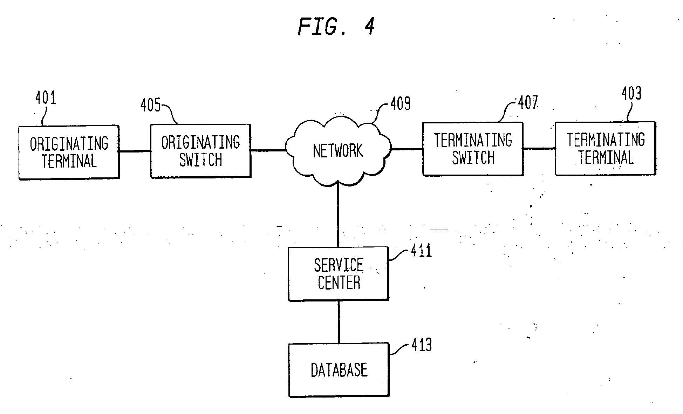

FIG. 4 illustrates a more general network for implementing Applicants' invention. An originating terminal 401 originates a call. The originating terminal can be a mobile terminal or a data terminal or a land-based terminal. The originating terminal is connected through an originating switch 405 to a telecommunications network 409. The network is connected to a service center 411 which accesses a database 413. For each terminating terminal having the spam protection feature the database stores the identification of that terminal and the security code assigned to that terminal. If the call setup request from originating terminal 401 contains the correct security code or if no security code is required because the originating terminal has a class of service, such as that of a law enforcement agency, which allows calls to be completed without requiring the security code, then the call can be completed through network 409 via terminating switch 407 to terminating terminal 403. For e-mail connections the terminating terminal is the e-mail server and messages are blocked before they reach that e-mail server. Subsequently the e-mail server can be accessed by a user terminal.

The above description is of one preferred embodiment of Applicants' invention. Other embodiments will be apparent to those of ordinary skill in the art without departing from the scope of the invention. The invention is limited only by the attached claims.

## Claims

1. A method of completing a telecommunications call comprising the steps of:
assigning to a telecommunications terminal a security code;
requesting a connection from a calling telecommunications terminal to a called telecommunications terminal having said security code by supplying the identity of said called communications terminal and a security code;
checking whether the supplied security code matches the security code assigned to said called telecommunications terminal; and
completing said call to said called telecommunications terminal only if the supplied security code matches the assigned security code.

2. The method of claim 1 wherein the step of assigning comprises the step of storing said security code in a database; and
wherein the step of determining whether said supplied security code matches said assigned security code comprises the step of comparing the supplied security code with the stored security code.

3. The method of claim 1 further comprising the step of:
determining whether a calling telecommunications terminal has a class of service entitling it to override the security protection of the called terminal;
wherein the step of comparing the supplied security code with the called security code is bypassed; and
wherein said calling terminal does not supply a security code in the connection request.

4. The method of claim 1 wherein said telecommunications call is a call to an e-mail server;
wherein the step of assigning to a telecommunications terminal a security code, comprises the step of assigning a security code to an e-mail address.

5. The method of claim 1 wherein the step of supplying said security code comprises the step of embedding said security code in text of a message and not in a header of said message;
whereby an interception of message headers does not intercept said security code.

6. Apparatus for completing a telecommunications call comprising the steps of:
means for assigning to a telecommunications terminal a security code;
means for accepting a connection request from a calling
telecommunications terminal to a called telecommunications terminal having said security code, said request comprising the identity of said called communications terminal and a supplied security code;
means for checking whether the supplied security code matches the security code assigned to said called telecommunications terminal; and
means for completing said call to said called telecommunications terminal only if the supplied security code matches the assigned security code.

7. The apparatus of claim 6 wherein the means for assigning comprises means for storing said security code in a database; and
wherein the means for determining whether said supplied security code matches said assigned security code comprises means for comparing the supplied security code with the stored security code.

8. The apparatus of claim 6 further comprising:
means for determining whether a calling telecommunications terminal has a class of service entitling it to override the security protection of the called terminal;
wherein the means for comparing the supplied security code with the called security code is bypassed; and
wherein said calling terminal does not supply a security code in the connection request.

9. The apparatus of claim 6 wherein said telecommunications call is a call to an e-mail server;
wherein the means for assigning to a telecommunications terminal a security code comprises means for assigning a security code to an e-mail address.

10. The apparatus of claim 6 wherein the means for supplying said security code comprises means for embedding said security code in text of a message and not in a header of said message;
whereby an interception of message headers does not intercept said security code.
